(19) Europäisches Patentamt
European Patent Office
Office européen des brevets

(11) **EP 4 651 037 A1**

(12) **EUROPEAN PATENT APPLICATION**

(43) Date of publication:
**19.11.2025 Bulletin 2025/47**

(51) International Patent Classification (IPC):
**G06N 10/20** (2022.01)

(21) Application number: **24175322.7**

(22) Date of filing: **13.05.2024**

(52) Cooperative Patent Classification (CPC):
**G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Terra Quantum AG**
**9000 St. Gallen (CH)**

(72) Inventors:
- **KYRIACOU, Basil**
  **9000 St. Gallen (CH)**
- **KORDZANGANEH, Mo**
  **9000 St. Gallen (CH)**
- **MELNIKOV, Alexey**
  **9000 St. Gallen (CH)**

(74) Representative: **Lucke, Andreas**
**Boehmert & Boehmert**
**Anwaltspartnerschaft mbB**
**Pettenkoferstrasse 22**
**80336 München (DE)**

(54) **A METHOD AND SYSTEM FOR SIMULATION OF A QUANTUM CIRCUIT**

(57) A computer-implemented method for simulation of a given quantum circuit, the method comprising separating the quantum circuit into layers of quantum gates of a common gate class; decomposing each of the layers of quantum gates of the common gate class into a sequence of base operations, the base operations being selected from a diagonal matrix operation based on unitary diagonal operations applied in parallel to qubits of the quantum circuit, a permutation matrix operation expressible as a matrix with exactly one entry of 1 in every row and column, with the rest being zero, and a Hadamard matrix operation based on Hadamard gates applied in parallel to qubits of the quantum circuit that transforms a plurality of the qubits between two orthogonal bases; and evolving a quantum state vector according to the layers decomposed into the sequence of base operations.

Fig. 4A

Fig. 4B

Fig. 4C

EP 4 651 037 A1

**Description**

FIELD OF THE INVENTION

The present invention is in the field of quantum machine learning. More precisely, the present invention relates to simulation methods for quantum circuits, in particular for quantum machine learning and quantum optimization.

BACKGROUND

Quantum computers provide a platform of controllable quantum mechanical systems whose state and interaction can be controlled in order to perform a computation. The computation is realized by a deterministic evolution of the controllable quantum mechanical systems, and the state of the quantum mechanical systems can be measured to determine the outcome of the computation.

The quantum computer generally encodes information in so called qubits, acting as a quantum mechanical equivalent of classical bits. Qubits are physical systems whose quantum mechanical state can be (coherently) controlled and (substantially) preserved between two basis states during the time of a computation, in the following referred to as |o> and |1>. As an example, a qubit may be implemented by encoding information in the spin state of an electron, e.g. in the electron being in an "up" state or a "down" state, but may also be encoded in a polarization state of a photon, in states of a (superconducting) oscillator, in energy levels of an atom, or the like.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In order to compute solutions to problems which are considered intractable on classical computers, a quantum computer can leverage the special properties of quantum mechanical states, in particular the superposition and entanglement of different quantum states, to find solutions with a comparatively low number of calculation steps or access a large internal state space.

SUMMARY OF THE INVENTION

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

Thus, in parallel to current advances in quantum hardware, efforts are directed at determining algorithms and computing paradigms for optimizing the use of the limited processing resources available, which are supported by quantum simulation libraries relying on classical processing resources and are capable of simulating a quantum state evolution under the influence of quantum gates.

For the simulation of a quantum evolution on classical hardware, a transformation of the qubits according to the quantum gates can be represented as a matrix multiplication on the quantum state vector, a vector of $N = 2^n$ complex numbers often called probability amplitudes. However, since the quantum state vector is a vector of size $N = 2^n$, typically matrix multiplication requires $O(N^2)$ classical complexity, which limits the application of the corresponding simulation paradigm due to the exponential scaling.

In view of this state-of-the-art, the object of the invention is to provide an efficient simulation method, computer program and system for simulating quantum circuits.

This object is solved by a computer-implemented method, a system and computer program according to the independent claims. The dependent claims relate to preferred embodiments.

According to a first aspect, a computer-implemented method for simulation of a given quantum circuit is provided. The method comprises separating the quantum circuit into layers of quantum gates of a common gate class, and decomposing each of the layers of quantum gates into a sequence of base operations. The base operations are selected from a diagonal matrix operation, a permutation matrix operation, and a Hadamard matrix operation. The diagonal matrix operation is based on unitary diagonal operations applied in parallel to qubits of the quantum circuit, wherein each of the unitary diagonal operations is expressible as a diagonal matrix, where all elements of the diagonal matrix not on the diagonal are equal to zero. The permutation matrix operation is expressible as a matrix with exactly one entry of 1 in every row and column, with the rest being zero. The Hadamard matrix operation is based on Hadamard gates applied in parallel to qubits of the quantum circuit that transforms a plurality of the qubits between two orthogonal bases. The method finally comprises evolving a quantum state vector according to the layers decomposed into the sequence of base operations, the quantum state vector encoding a quantum state of the qubits of the quantum circuit.

The quantum circuit generally defines a plurality of quantum operations applied to a plurality of qubits, which can be classified in terms of gate classes. A gate class may comprise parametrized and/or non-parametrized single qubit gates, and multi-qubit gates, and/or multiple gate types corresponding to the base operations, such as different gate types expressible as diagonal matrix operations and/or decomposable into diagonal matrix operations. A high level gate class may be single qubit quantum gates or two-qubit quantum gates.

Separating the quantum circuit into layers of quantum gates of a common gate class may be achieved by arranging the quantum operations defining the quantum circuit into layers of quantum gates of a common gate type. The layers of quantum gates of a common gate type can be single qubit state rotations about the same axis, the same type of multi-qubit operations, such as SWAP and CNOT gates, expressible as a permutation matrix operation on the quantum state vector, or the same quantum gates, such a Hadamard gates. The layers of quantum gates of the same gate type/class can subsequently be decomposed into the base operations of the method, for which the inventors identified efficient quantum state evolutions of classical hardware.

The decomposition of the layers of the same gate class/type into the base operations may result in an arrangement of sequence of base operations acting on all or a large subset of the qubits, e.g. more than 50% of the qubits. Using the quantum circuit expressed in terms of base operations, the complexity of the matrix multiplications may be reduced on classical hardware and the computational complexity may be reduced to $O(N \log(N))$. The base operations define a limited set of unitary evolutions of the quantum state vector of the qubits, which can be efficiently calculated on classical hardware.

In some examples, the quantum state vector is representable by a vector of $N=2^n$ complex numbers.

In principle, the decomposition into the base operations may have exponential complexity for arbitrary quantum operations in the number of qubits. However, the inventors found that many currently investigated quantum computation architectures feature comparatively simple separations into layers of common gate class and/or type as well as decompositions into the base operations. Specifically, single qubit gates are often applied in parallel to multiple qubits can generally be efficiently decomposed into combinations of basis changes and Z-rotations on the qubits, e.g. expressing an X- or Y-rotation with a z-rotation and a basis change, e.g. based on Hadamard gate(s).

In some examples, the method comprises extracting a diagonal matrix operation expressible as a parametrized rotation of each qubit by an associated angle.

Rotations of the individual qubit states about the z-axis are expressible as a parametrized rotation of each qubit by an associated angle with a diagonal matrix operation, which can be efficiently calculated on classical hardware. Rotations of the qubit states about other axes can be expressed as a combination of z-axis rotations and basis changes, which may be expressed through a combination of Hadamard operations and z-axis rotations.

In some examples, a diagonal matrix operation expressible as a parametrized rotation of a plurality of (e.g. each) qubits by an associated angle about a first axis and a Hadamard matrix operation are extracted from a rotation of the plurality of qubits by an associated angle about a second axis, the second axis being different from and preferably perpendicular to the first axis. The first axis can be the Z-axis, e.g. the axis along which the computational basis states are defined, and the second axis may the X- or Y-axis, perpendicular to the Z-axis.

In addition, CNOT gates, commonly employed as entangling gates for entangling the quantum states of two-qubits, can be represented as permutation matrices on the qubit states. Since CNOT operations and single qubit rotations are often the core building blocks of engineered quantum circuits, e.g. for quantum computation, the separation into the layers of a common gate class/type may enable the direct decomposition into layers of base operations with few (trivial) algorithmic steps.

The quantum circuit may be initially separated into layers of single- and multi-qubit operations, or may be separated into layers of common gate classes corresponding to the base operations, which may subsequently be decomposed, and optionally contracted, into layers of base operations. In some examples, the quantum circuit is directly separated into layers of common gate type. In some examples, the quantum circuit is received with the quantum gates pre-arranged in terms of layers, wherein the layers may comprise parallel application of quantum gates of a certain gate class and/or gate type to the qubits of the quantum circuit.

In several quantum computation algorithms, the quantum gates are already at least partially arranged to allow for direct separation into layers of a common gate type applying to all or a large subset of the qubits, such as 30% of the qubits or more, more than half of the qubits, or more than 75% of the qubits. In these cases, the geometry and gate selection of the quantum circuit architecture may lend itself to decomposition into the base operations.

In some examples, the quantum circuit is a variational quantum circuit.

Variational quantum circuits are promising applications for near term available quantum processors, i.e. noisy intermediate-scale quantum (NISQ) devices. In variational quantum algorithms, the action of the quantum gates is parametrized in terms of variational parameters, and the variational parameters may be systematically varied with the help of a classical computing resource, in a manner analogous to machine learning, e.g. by implementing a kernel method for classifying an input using a variational quantum circuit. By varying the variational parameters to extremize a cost/loss function, which attributes a cost to the output of the variational quantum circuit with respect to an optimal solution, an output of the variational quantum circuit can be "trained" to provide an optimal solution to an unseen set of inputs. In these applications, entanglement between different qubits may give access to a large internal state space to provide "quantum advantage".

A variational quantum circuit can often be defined in terms of layers of variational quantum gates, such as single qubit operations parametrized by the variational parameters, entangling gates, which can be defined by CNOT gates applied to all qubits in parallel, and encoding layers, generally implemented as single qubit rotations according to an input feature vector for which the variational quantum circuit is tasked to determine an output. Thus, in a variational quantum circuit, the quantum gates may be (pre-)arranged in terms of layers of a common gate type, and the layers of the variational circuit may be directly decomposed into the base operations.

In some examples, the quantum circuit comprises layers of quantum gates applied in parallel to the qubits of the quantum circuit, wherein each of the layers of quantum gates comprises the same quantum gate type applied to a subset or all of the qubits of the quantum circuit.

For example, for a variational quantum circuit, the quantum circuit can be substantially composed of layers of quantum gates of the same gate type applied in parallel to the qubits of the quantum gates.

By decomposing the layers of encoding gates and variational layers into combinations of Hadamard matrix operations and diagonal matrix operations, common variational quantum circuits may be efficiently decomposed into the base operations.

The Hadamard matrix operation can be defined in terms of a plurality of Hadamard gates acting on the qubits of the quantum circuit. Each of the Hadamard gates can be expressible as a matrix of is and -1s. For a plurality of Hadamard gates applied in parallel to a plurality of qubits, an efficient quantum state evolution on classical hardware can be computed based on a Hadamard transformation. Specifically, the Fast-Hadamard-Walsh-Transform can implement the evolution of the quantum state vector according to the Hadamard matrix operation. Although the Hadamard transform generally acts on all qubits, the operation may also be truncated to apply only to a subset of the qubits.

In some examples, an evolution of the quantum state vector according to a Hadamard matrix operation is mathematically equivalent to a Hadamard transform of the quantum state vector of the qubits of the quantum circuit or a portion thereof, in particular based on the Fast-Hadamard-Walsh-Transform.

The Fast-Hadamard-Walsh-Transform is an algorithm which can transform the quantum state vector of a multiqubit quantum state according to Hadamard operations on each of the qubits with a complexity of $O(N \log N)$.

The CNOT gate common in quantum architectures can be expressed as a permutation of the elements of quantum state vector, and the evolution of the quantum state vector may be efficiently implemented based on a permutation of memory locations holding the complex probability amplitudes of the quantum states. Similarly, a SWAP operation or an X gate can equally be represented as a permutation of the quantum states in the quantum state vector. Multiple adjacent and/or parallel SWAP and/or CNOT operations may be combined to form a base operation acting on multiple and/or all qubits of the quantum circuit.

In some examples, an evolution of the quantum state vector according to a permutation matrix operation is mathematically equivalent to a permutation of memory access pointers pointing at values of the quantum state vector of the qubits of the quantum circuit.

The permutation of memory values in a computer may have a complexity of $O(N)$, allowing to efficiently implement the evolution of the quantum state vector according to multi-qubit operations. The permutation of memory values may be realized with access pointer permutations pointing at the memory values in a machine-readable storage, e.g. in an algorithmic manner adapted to the underlying hardware, such as using machine code obtained from assembler or C++ code enabling access pointer manipulation (e.g. swap memory pointers in a C++ program), or a similar programming language enabling access pointer manipulation. However, a computational speed-up can also be achieved in other programming languages without said optimization or using specific functions/libraries for the access pointer permutation/manipulation, e.g. for implementing the permutation in a manner which harnesses an innate ability of the processing system to efficiently permutate memory access pointers. In some examples, a compiler may translate the instructions for permutations of memory values into access pointer manipulations in corresponding machine code interpreted by a processing system.

The diagonal matrix operations can comprise S ("phase gate"), CZ (controlled phase), and I (identity operation) operations as well as single qubit operations, which can be implemented as element-wise multiplications of the values of the state vector with the eigenvalues of the operation.

In some examples, an evolution of the quantum state vector according to a diagonal matrix operation is mathematically equivalent to an element-wise multiplication of the quantum state vector and the eigenvalues of the diagonal matrix operation.

For many diagonal matrix operations, the eigenvalues can be computed in a straightforward manner and may be held in memory for quantum state evolutions. For non-parametrized diagonal matrix operations, e.g. the S, CZ or I operations, the eigenvalues may be computed once for a given number of qubits and retained in a machine-readable memory accessible by a processing system implementing the method.

In some examples, the method further comprises determining the eigenvalues for non-parameter based diagonal matrix operations and storing the eigenvalues in a machine-readable memory accessible by a processing system implementing the method.

For parametrized diagonal matrix operations, such as parallel single qubit rotations about the Z-axis of a plurality of qubits, which are common in many computing architectures, the eigenvalues may be computed taking advantage of the fact that for quantum evolutions, the matrices will be unitary and their eigenvalues may be expressed as $e^{i\alpha}$. The inventors identified that for a layer of single qubit state rotations about the Z-axis, the parameter $\alpha$ and the rotation angle can be correlated as $\alpha = K\theta$, wherein $\theta$ is a vector of rotation angles for rotating the respective qubits, and K is an n*N assignment matrix, wherein n is the number of qubits and N is the number of computational basis states of the qubits.

In some examples, the method further comprises determining the eigenvalues for parameter based Z-rotation type operations of the qubits as the diagonal matrix operation based on or mathematically equivalent to evaluating the expression $\exp(iK\theta)$, wherein i is the imaginary unit, $\theta$ is a vector of rotation angles for the respective qubits of the quantum circuit according to the diagonal matrix operation, and K is an assignment matrix with n columns and N rows for the number of qubits and computational basis states, respectively, wherein the assignment matrix K is a matrix of 1s and -1s.

The assignment matrix K may be fixed for a given number of qubits based on the definition of the quantum states, such that the expression $\exp(iK\theta)$ may be evaluated directly based on the rotation angles with a complexity of $O(N \log N)$ through matrix multiplication and exponentiations.

In some examples, the assignment matrix K is obtainable based on the elementwise operation $K = -2J + 1$, wherein J is a binary assignment matrix, wherein each row of the binary assignment matrix corresponds to one of the computational basis states and columns indicate the qubits of the quantum circuit, wherein a one in the binary assignment matrix indicates an excited state of the respective qubit in the respective computational basis state, and a zero in the binary assignment matrix indicates a ground state of the respective qubit in the respective computational basis state.

The expression $K\theta$ results in a vector, which can be exponentiated efficiently, such that the hardware burden of computing NxN matrix multiplication can be avoided on classical hardware. In variational quantum circuits, several Z-rotation type operations may be repeated in different evaluations of the same or similar quantum circuits, such as the same Z-rotation type operations for fixed variational parameters, when varying the input feature vector (e.g. affecting only the encoding layer), or the same Z-rotation type operations for the same encoding layers, after updating the variational parameters, allowing to further reduce the computational burden.

For example, after evaluating the expression $\exp(iK\theta)$, the vector of eigenvalues may be retained in memory and evaluating the quantum circuit may be effected by multiplying the vector of eigenvalues with the quantum state vector.

The vector of eigenvalues for one of the base operations may be stored in memory for multiple evaluations of the quantum circuit.

According to a second aspect, a system for simulation of a given quantum circuit or for preparing the quantum circuit for classical simulation is provided. The system is configured to identify layers of quantum gates of a common gate class in the quantum circuit, and decompose each of the layers of quantum gates into a sequence of base operations. The base operations are selected from a diagonal matrix operation, a permutation matrix operation, and a Hadamard matrix operation. The diagonal matrix operation is based on diagonal operations applied in parallel to qubits of the quantum circuit, wherein each of the diagonal operations is expressible as a diagonal matrix, where all elements of the diagonal matrix not on the diagonal are equal to zero. The permutation matrix operation is expressible as a matrix with exactly one entry of 1 in every row and column, with the rest being zero. The Hadamard matrix operation is based on Hadamard gates applied in parallel to qubits of the quantum circuit that transforms a subset or all of the qubits between two orthogonal bases. The system is further configured to provide the quantum circuit expressed in terms of the base operations for evolving a quantum state vector according to the layers decomposed into the sequence of base operations, the quantum state vector encoding a quantum state of the qubits of the quantum circuit.

The system may implement the method according to the first aspect or any combination of its embodiments. In particular, the system according to the second aspect may also benefit from any feature of the preferred embodiments of the first aspect.

The system may be controlled using a processing system, which may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The system may comprise multiple servers for executing the respective steps, e.g. by distributing different computational operations over multiple hardware systems. However, the processing steps may equally be executed by a single server or a server system, which may distribute internal computations, e.g. of the same method step, over multiple processing devices and/or processing cores. For example, given a plurality of diagonal matrix operations, different processing units may be tasked with the determination of eigenvalues for different diagonal matrix operations in parallel.

In some examples, the system is further configured to evolve the quantum state vector according to the layers of quantum gates decomposed into the sequence of base operations, the quantum state vector encoding a quantum state of the qubits of the quantum circuit.

In some examples, the quantum circuit is a variational quantum circuit, and the system is configured to update variational parameters of the quantum circuit encoding variable actions on the qubits of the quantum circuit and to determine an updated sequence of base operations based on the variational parameters, in particular to determine updated diagonal matrix operations corresponding to the variational parameters.

According to a third aspect, a computer program is provided comprising machine readable instructions, which when the computer program is executed by a processing unit cause the processing unit to implement a method according to the first aspect and/or to implement and/or to control a system according to the second aspect.

A non-transitory medium comprising the machine-readable instruction can be provided, which, when executed by a processing system, implement a method according to the first aspect and/or a system according to the second aspect.

DETAILED DESCRIPTION OF EMBODIMENTS

The features and numerous advantages of the method and system according to the present invention will best be understood from a detailed description of preferred embodiments with reference to the accompanying drawings, in which:

Fig. 1 schematically illustrates an example of a quantum computation system for implementing and driving a quantum circuit, according to a schematic quantum circuit diagram;

Fig. 2 illustrates an example of a hybrid quantum-classical computation system for implementing and driving a variational quantum circuit;

Fig. 3 illustrates a flowchart for a method for simulation of a quantum circuit according to an example;

Fig. 4A-C illustrates a schematic example of quantum circuit expressed through different quantum gates, with Figs. 4B and 4C expressing the circuit of Fig. 4A in terms of gates corresponding to a set of base operations; and

Fig. 5A-6B illustrate results of using the above-described algorithmic decomposition and quantum state evolution to perform quantum circuit simulations for a task of training a variational quantum circuit to learn a top-hat function via gradient optimization on a binary-cross entropy loss function using a Quantum Depth Infused (QDI) quantum circuit architecture compared to simulation of the same circuit using the Pennylane function library.

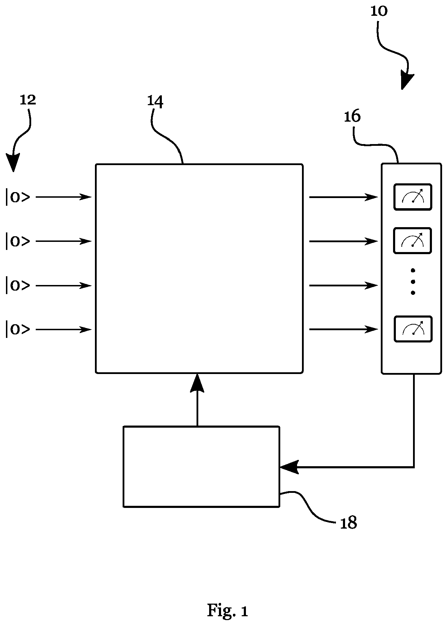

Fig. 1 schematically illustrates an example of a quantum computation system 10 for implementing and driving a quantum circuit, according to a schematic quantum circuit diagram. The schematic quantum circuit diagram depicts an evolution of quantum states from left to right for an exemplary number of computation qubits, wherein control operations on the qubits can be arranged along lines of qubit state evolution to indicate an architecture or time-sequence associated with the quantum circuit. The skilled person will appreciate that additional coherent operations may be included as part of the quantum circuit, and the quantum circuit may be extended to an arbitrary number of qubits. Further, although reference may be made to specific control operations in the following description, the skilled person will appreciate that different control operations may be used to implement the system and methods of the present disclosure, e.g. depending on the physical representation of the qubits.

The illustrated system 10 of Fig. 1 comprises a qubit register 12 comprising a plurality of computation qubits. A plurality of quantum gates 14 may act on the computation qubits of the qubit register 12 to perform a computation/controlled evolution. The outcome of the computation may be measured by a measurement sensor 16 which projects the states of the computation qubits onto the computational basis states of the hybrid quantum-classical computation system 10. The outcome can be received by a control system 18. Variable actions of the plurality of quantum gates 14 may be parametrized by associated parameters and may be used by the control system 18 to determine a hardware control of the quantum system, e.g. a certain electromagnetic pulse coherently interacting with the quantum state of the qubit to drive a predetermined evolution of the quantum state, or a tuning of an interaction of qubits, such as to implement multi-qubit gates.

The control system 18 may be configured to (repeatedly) perform a computation sequence. The computation sequence may comprise initializing the computation qubits of the qubit register 12 before the computation, such as into the ground state of each computation qubit, e.g. to form an initial state of the computation qubits of |oo...o>. The initialization of the computation qubits into their respective ground state may in some examples comprise a relaxation process, and the initialization of the computation qubits may not require active control of the computation qubits.

The control system 18 may then apply the plurality of quantum gates 14 to the computation qubits of the qubit register 12 to drive a coherent evolution of the computation qubits. The control system 18 may optionally produce superposition states of all computation qubits, e.g. by applying a Hadamard gate to each of the computation qubits, and may subsequently apply the plurality of quantum gates 14.

Following the coherent evolution, the state of the computation qubits in the qubit register 12 may be measured with the sensor 16. The measurement sensor 16 may be a plurality of single qubit state detectors for measuring the state of each computation qubit following the evolution according to the plurality of quantum gates 14. The measurement projects the quantum state of the qubits onto a measurement basis, and by repeating the computation, the probabilities of measuring a certain outcome state may be determined. By appropriately selecting the plurality of quantum gates 14, the system 10 can be used to implement a computation.

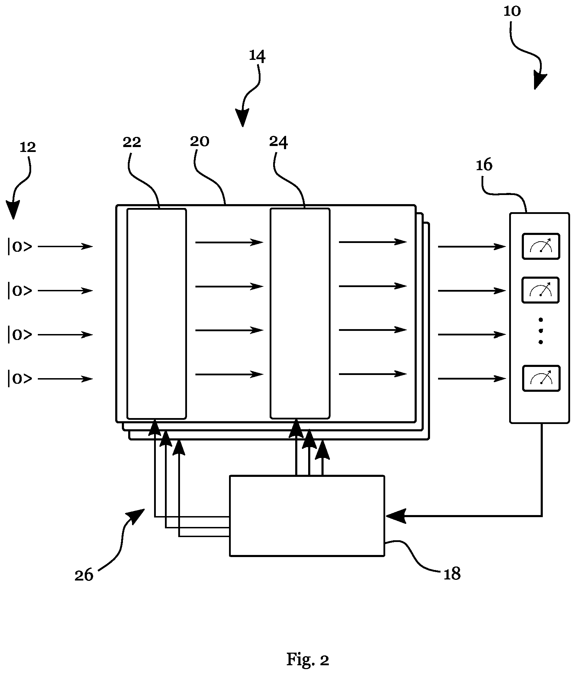

Fig. 2 illustrates another example of a hybrid quantum-classical computation system 10 for implementing and driving a variational quantum circuit. In variational quantum circuits, the action of at least some of the quantum gates in the variational quantum circuit is parametrized, such that a measured output of the computation qubits for a given input is a function of variational parameters parametrizing variable actions of the variational quantum gates, such as a rotation angle. The combined action of the at least partially parametrized quantum gates may be termed a variational quantum circuit. The variational parameters are generally "trained" similar to classical machine learning models, e.g. neural networks, to enable the variational quantum circuit to learn solving a given task, e.g. a classification task.

The system 10 again comprises a qubit register 12 comprising a plurality of computation qubits, and a plurality of quantum gates 14 arranged in layers of quantum gates 20, which may act on the computation qubits of the qubit register 12 in sequence to perform a computation. Each layer of quantum gates 20 can comprise an encoding layer 22 and a variational layer 24, wherein the variational layer 24 comprises a plurality of variational quantum gates whose actions may be parametrized by different variational parameters in each layer of quantum gates 20.

The encoding layer 22 comprises a plurality of encoding gates whose action is parametrized based on values of an input vector of features to be labeled according to a given labeling task. The encoding layer 22 in different layers of quantum gates 20 may be based on different sub-vectors 26 of the input vector of features, such that different layers of quantum gates 20 may encode different values of the input vector of features into the states of the computation qubits. However, in some examples, different layers of quantum gates 20 may encode the same features or the same features multiplied by different scaling factors, such as to effectively fit a higher Fourier series to the respective features of the input vector as part of a data-reuploading scheme.

Each layer of quantum gates 20, e.g. as part of each variational layer 24, may comprise multi-qubit gates for entangling the states of different computation qubits of the qubit register 12, such as a plurality of CNOT gates, as entangling gates for entangling quantum states of at least two qubits of the computation qubits.

To encode the values of the input vector of features into the quantum Hilbert space, the "angle embedding" method can utilized, which involves rotating the respective qubit around an axis, such as the Z-axis (it can also be the X or Y-axis) on the Bloch sphere by an angle proportional to a value corresponding to the respective feature.

The subsequent application of a plurality of layers of quantum gates 20 to the qubits may form the variational quantum circuit, with the variational quantum circuit being parametrized by variational parameters for each layer. Each layer of quantum gates may comprise an entangling gate for each of the computation qubits, such as to create a superposition state of the computation qubits. In some examples, each layer of quantum gates is configured to entangle the states of each computation qubit with at least one other qubit of the computation qubits. In some examples, each layer comprises a plurality of entangling gates to create a superposition state of all the computation qubits.

The outcome of the computation may be measured by a measurement sensor 16 after all layers of quantum gates 20 have acted on the computation qubits, wherein the measurement sensor 16 may project the states of the computation qubits onto the computational basis states of the hybrid quantum-classical computation system 10. Based on a measured output, which may be determined based on a measurement outcome obtained with the measurement sensor 16 or based on the measurement outcomes obtained with the measurement sensor 16 in multiple repetitions of applying the variational quantum circuit to the computation qubits, the control system 18 may determine an output label for labeling the input vector of features according to the given labeling task. Measuring the computation qubits multiple times may allow determining probabilities of measuring each of the computational basis states of the qubits for the quantum state produced by the application of the plurality of quantum gates.

On the basis of the measured output, the control system 18 can classically calculate an "energy"/"cost"/"loss" of the label with a cost/loss function based on a labeling task. The labeling task may be specified according to a function, which assigns a loss to the measured output or the output label derived therefrom, or may be specified according to pairs of sample input vectors of features and sample target labels, e.g. as points of training data representing a labeling function, wherein the loss may be based on a difference between the output label and the sample target label.

Conventionally, the control system 18 may repeat the computation sequence with adjusted variable actions based on the outcome, such as to progressively improve the quality of an output label associated with the measured outcome. For example, the control system 18 may repeat the computation sequence with adjusted operation parameters for the variational quantum gates in order to determine a gradient or energy landscape associated with the plurality of quantum gates 14 from the measured outcomes and may update the variational parameters based on the estimated gradient in order to progressively adjust the variational quantum circuit towards an improved solution.

Variational quantum circuits, among other quantum circuits, are promising candidates for solving real-world problems with near term quantum hardware, such that optimal training algorithms and architectures are currently tested. However, since access to quantum hardware is still limited, most investigation relies on a simulation of the action of the variational quantum circuit on the qubits, which can become computationally expensive even for moderately sized quantum systems.

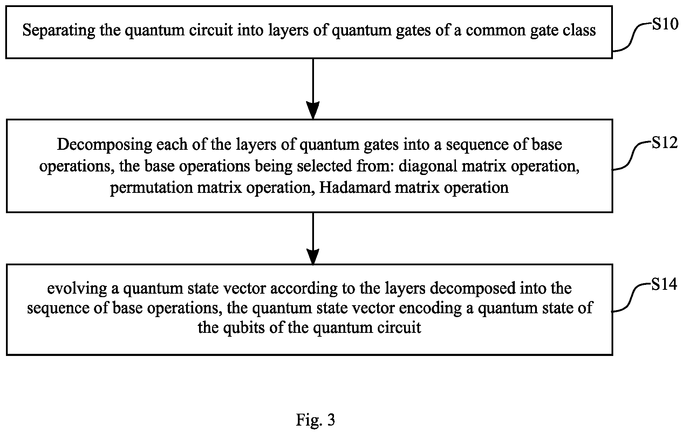

Fig. 3 illustrates a flowchart for a method for simulation of a quantum circuit. The method comprises separating the quantum circuit into layers of quantum gates 20-24 of a common gate class (S10), and decomposing each of the layers of quantum gates 20-24 into a sequence of base operations (S12). The base operations are selected from a diagonal matrix operation, a permutation matrix operation, and a Hadamard matrix operation. The diagonal matrix operation is based on unitary diagonal operations applied in parallel to qubits of the quantum circuit, wherein each of the unitary diagonal operations is expressible as a diagonal matrix, where all elements of the diagonal matrix not on the diagonal are equal to zero. The permutation matrix operation is expressible as a matrix with exactly one entry of 1 in every row and column, with the rest being zero. The Hadamard matrix operation is based on Hadamard gates applied in parallel to qubits of the quantum circuit that transforms a subset or all of the qubits between two orthogonal bases. The method finally comprises evolving a quantum state vector according to the layers decomposed into the sequence of operations, the quantum state vector encoding a quantum state of the qubits of the quantum circuit (S14).

The base operations provide a limited library of operations corresponding to different gate types and implementable on classical hardware according to corresponding base operation algorithms, which can be used to evolve the quantum state with reduced complexity on classical hardware. Specifically, computationally expensive matrix multiplications of large matrices can be sped up or even exchanged for more efficient single value multiplications and memory access manipulations, enabling a significant reduction in the overall complexity of evolving the quantum state vector, which is generally a vector of size $N = 2^n$, with N complex numbers commonly called probability amplitudes, with n being the number of qubits in the quantum circuit.

An algorithm implementing the method can break down any gate-based quantum circuit (represented in the classical computer as several unitary matrices) into the 3 separate base operations.

The first base operation, diagonal matrix operations, may be expressed as diagonal matrices where all elements of the matrix not on the diagonal are equal to zero. Example quantum gates for diagonal matrix operations are RZ, CZ, Z, S, and I, e.g. expressible as:

$$I = \begin{pmatrix} 1 & 0 \\ 0 & 1 \end{pmatrix}$$

$$S = \begin{pmatrix} 1 & 0 \\ 0 & i \end{pmatrix}$$

$$Z = \begin{pmatrix} 1 & 0 \\ 0 & -1 \end{pmatrix}$$

$$RZ(\theta) = \begin{pmatrix} e^{-i\theta/2} & 0 \\ 0 & e^{i\theta/2} \end{pmatrix} \tag{1}$$

$$CZ = \begin{pmatrix} 1 & 0 & 0 & 0 \\ 0 & 1 & 0 & 0 \\ 0 & 0 & 1 & 0 \\ 0 & 0 & 0 & -1 \end{pmatrix}$$

The second base operation, Permutation matrix operations, can be expressed by a binary matrix where there is exactly one entry of 1 in every row and column, with the rest being zero. These can be represented as a permutation of the state vector. Example quantum gates for permutation matrix operations are CNOT, SWAP and X, e.g. expressible as:

$$X = \begin{pmatrix} 0 & 1 \\ 1 & 0 \end{pmatrix} \tag{2}$$

$$SWAP = \begin{pmatrix} 1 & 0 & 0 & 0 \\ 0 & 0 & 1 & 0 \\ 0 & 1 & 0 & 0 \\ 0 & 0 & 0 & 1 \end{pmatrix}$$

$$CNOT = \begin{pmatrix} 1 & 0 & 0 & 0 \\ 0 & 1 & 0 & 0 \\ 0 & 0 & 0 & 1 \\ 0 & 0 & 1 & 0 \end{pmatrix}$$

The third base operation, Hadamard matrix operation, can be expressed as a matrix of 1s and -1s that transforms (up to) each qubit from the Z-basis to the X-basis and vice versa. Example quantum gates for Hadamard matrices is the Hadamard gate, e.g. expressible as:

$$H = \frac{1}{\sqrt{2}} \begin{pmatrix} 1 & 1 \\ 1 & -1 \end{pmatrix} \tag{3}$$

Additionally, it is noted that although the examples given pertain to operations on one or two qubits, the base operations considered primarily in the following will be operations acting on all qubits in parallel, or at least a significant subset thereof, e.g. through truncation of the respective operation to a certain subset, through the action of a corresponding layer 20-24 expressible as the base operation. In other words, when decomposing a layer of quantum gates into the base operations, the resulting base operation(s) will generally act on all qubits or a significant subset thereof and can be expressed in terms of an action on all qubits.

For an arbitrary set of quantum gates, the decomposition may require an exponential number of these layers of base operations potentially losing any speed advantage. However, it is often the case that quantum machine learning and optimization architectures allow for a simple decomposition into these three types of layers of base operations.

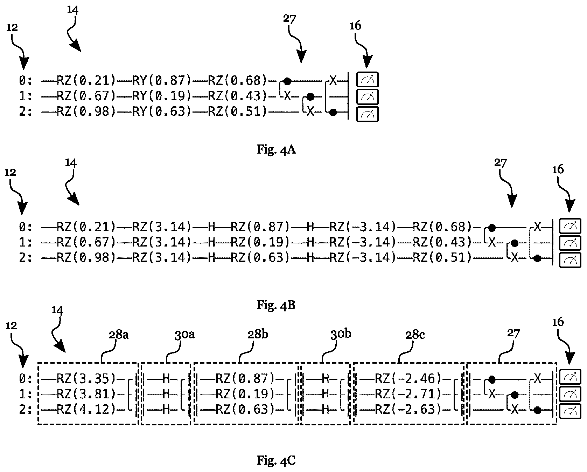

Fig. 4A illustrates a schematic example of quantum circuit comprising a plurality of quantum gates 14 acting on computation qubits of a qubit register 12, which are measured by detectors 16 after the plurality of quantum gates 14 has acted on the qubits. The quantum gates are expressed in terms of single qubit rotations RX(x), RY(y), RZ(z), which are parametrized by the bracketed value, corresponding to a rotation angle. In addition, the quantum circuit comprises a layer of entangling gates 27 implemented as CNOT gates acting on neighboring qubits, and represented by vertical lines connecting the horizontal lines, with a "dot" and "X" representing the control and target qubits, respectively.

The example could be part of a more complex circuit, such as a layer of quantum gates 20 of a variational quantum circuit. The layer of entangling gates 27 comprises CNOT gates and may therefore be represented as a permutation matrix operation acting on the quantum state vector of the qubits.

The "RZ(z)" gates are parametrized diagonal matrix operations, and are already grouped along the horizontal operation, such that they may be arranged as a diagonal matrix operation in a straightforward manner, i.e.

$$A = \begin{pmatrix} 1 & 1 & 0 & 1 & 0 & 0 \\ 0 & 1 & 1 & 0 & 1 & 0 \\ 0 & 0 & 1 & 1 & 0 & 1 \end{pmatrix}, \tag{4}$$

$$RZ(\theta) \to diagonal$$

Thus, both the parallel applications of CNOT gates and the parallel application of parametrized RZ gates can be assigned to respective gate classes, which correspond to one of the base operations.

However, the arbitrary rotations of the quantum states around the X axis specified by the parallel application of RY(x) gates may not have a direct correspondence to one of the base operations, but may form part of a gate class of parallel single qubit rotations about a different axis. Nonetheless, the RY(x) gates may be grouped into a layer of operations of a common gate type/class (i.e. RX/RY rotation type gates) and decomposed into base operations. Specifically, for layers of RX and RY single qubit rotations, the following decompositions may apply:

$$RX(\theta) = HRZ(\theta)H \rightarrow Hadamard, diagonal, Hadamard \qquad (5)$$

$$RY(\theta) = RZ(-\pi)RX(\theta)RZ(\pi) \rightarrow diagonal, Hadamard, diagonal, Hadamard, diagonal \qquad (6)$$

In other words, each of the two other rotation gates may be expressed as a combination of Hadamard and RZ rotation gates.

Fig. 4B illustrates the quantum circuit of Fig. 4A, with the parametrized RY rotation gates decomposed into a combination of Hadamard and parametrized RZ rotation gates. Since the decomposition results in adjacent applications of parametrized RZ gates, these neighboring gates can be contracted to obtain the decomposed expression of the quantum circuit of Fig. 4A illustrated in Fig. 4C. In other words, subsequent layers of the same type of base operation can be grouped together and treated as a single layer of operations.

The decomposed circuit comprises a sequence of a first parametrized RZ gate layer applied to all qubits as a first diagonal matrix operation 28a, followed by a first Hadamard matrix operation 30a, a second diagonal matrix operation 28b, parametrized by different (second) rotation angles, a second Hadamard matrix operation 30b, and a third diagonal matrix operation 28c, followed by the layer of entangling gates 27 expressible as a permutation matrix operation. The resulting state can be measured, e.g. based on a projection of the quantum state vector on the measurement basis.

Thus, the layer of quantum gates 20 of Fig. 4A, which may be part of a variational quantum circuit, can be efficiently decomposed into the base operations with minimal steps.

The permutation matrix operation may be evaluated by swapping the entries of the quantum state vector in the memory of a classical processing system implementing the method with comparatively low computational complexity. The swapping of the entries stored in the memory may be realized with memory access pointer manipulations, e.g. in a manner close to the underlying hardware, such as assembler, C++ programming, or a similar programming language enabling access pointer manipulation. In some examples, a compiler may translate the instructions for permutations into access pointer manipulations in corresponding machine code. Memory access pointer manipulations can generally be efficiently implemented on classical hardware and therefore enable implementation of permutation matrix operations with low computational complexity.

For example, for a CNOT gate acting on two qubits as provided in Eq. (2), the evolved quantum state can be expressed as the permutation of the third and fourth elements of the quantum state vector:

$$\sigma_{CNOT} = (1 \quad 2 \quad 4 \quad 3) \qquad (7)$$

Thus, the new quantum state vector after evolution according to the permutation matrix operation can be found efficiently through the use of indexing:

$$\phi' = \phi[\sigma] \qquad (8)$$

The Hadamard matrix operation can be evaluated on classical processing system based on a Hadamard transformation. The Hadamard transformation is a well-studied mathematical operation even outside of quantum information. A layer of Hadamard gates (one on every qubit) is equivalent to performing this transformation on the quantum state vector. A well established algorithm for this transform is the Fast-Hadamard-Walsh-Transform (FHWT), which performs $O(N \log N)$ additions and subtractions, as part of a special type of discrete Fourier transform (DTF). This is possible because, other than a global factor of $1/\sqrt{(2^n)}$, all the elements in a Hadamard matrix are $\pm 1$. As a result, the transformation can be completed with only additions and subtractions, which are typically computationally less costly than multiplications. While the FHWT would generally transform the entire quantum state vector, it can also be truncated to only apply Hadamard gates to specific qubits if needed.

For the diagonal matrix operations 28a-c, the state vector can be transformed by performing elementwise multiplication of the entries of the quantum state vector and the eigenvalues of the diagonal matrix operation. This requires $O(N)$ operations once the eigenvalues are found. For static gates such as Z or S, the eigenvalues can be cached in memory and reused so the total operation complexity remains are $O(N)$. This is particularly helpful when simulating a measurement, which can be implemented with a diagonal matrix with real entries.

To encode parameter-based diagonal matrices, such as RZ($\theta$), the method can comprise initially finding the eigenvalues of the operation. Since RZ($\theta$) is unitary, all its eigenvalues are of the form $e^{i\alpha}$. Therefore, the problem can be rephrased as determining a relationship between the parameters of the gate, $\theta$, and the exponent of the eigenvalues, a. It was found that for an RZ gate layer, $\alpha$ and $\theta$ can have the following connection:

$$\alpha = K\theta \qquad (9)$$

where $K$ is an $N \times n$ matrix with elements of only $\pm 1$, such that each row counts upwards in binary with +1 being assigned to zero and -1 being assigned to 1. $K$ can be created from a binary assignment matrix $J$ with the elementwise operation $K = -2J + 1$, wherein a one in the binary assignment matrix $J$ may indicate an excited state " |1>" of the respective qubit in the respective computational basis state, and a zero in the binary assignment matrix $J$ can indicate a ground state "|0>" of the respective qubit in the respective computational basis state. In the case of three qubits, with the computational basis states |000>, |001>, |010>, |011>, |100>, |101>, |110>, and | m>, the matrices J and K can for example be defined as:

$$J = \begin{pmatrix} 0 & 0 & 0 \\ 0 & 0 & 1 \\ 0 & 1 & 0 \\ 0 & 1 & 1 \\ 1 & 0 & 0 \\ 1 & 0 & 1 \\ 1 & 1 & 0 \\ 1 & 1 & 1 \end{pmatrix}, K = \begin{pmatrix} +1 & +1 & +1 \\ +1 & +1 & -1 \\ +1 & -1 & +1 \\ +1 & -1 & -1 \\ -1 & +1 & +1 \\ -1 & +1 & -1 \\ -1 & -1 & +1 \\ -1 & -1 & -1 \end{pmatrix}, \qquad (10)$$

For a given number of qubits, $K$ does not change, such that the matrix can in principle be computed once and retained in a storage. The transformation of an RZ($\theta$) layer on a state vector, $\Phi$, can be found through the equation:

$$\phi' = \phi \circ exp(iK\Theta), \qquad (11)$$

where "$\circ$" represents the elementwise product (also known as the Hadamard product, which is not to be confused with the Hadamard transform discussed above). It is noted that the result of *"K $\theta$"* is a vector so the exponentiation refers to elementwise exponentiation. The computationally most expensive part of the evolution may therefore be the product of $\theta$ (*n* vector) and $K(N \times n$ matrix) which has complexity $O(N \log N)$. The other two parts involve performing $O(N)$ exponentiations and finally $O(N)$ multiplications of the eigenvalues with the elements of the quantum state vector.

Thus, the quantum circuit may be efficiently decomposed into layers of the three base operations, and a quantum state vector holding the quantum state of the qubits may be evolved according to the quantum circuit with computational complexity $O(N \log N)$. The measurement can be expressed as a series of Hermitian matrices projecting the quantum state onto the measurement basis, for which the above-described decomposition into base operations may equally apply.

In general, for a quantum operation that starts in state *x* and applies unitary and hermitian matrices made such that any non-DPH (diagonal, permutation, or Hadamard) gates can be preprocessed into the H, RZ, CNOT basis, there will be u number of $N \times N$ unitary matrices $U_i$ that make up a shallow quantum circuit and h number of $N \times N$ Hermitian matrices $H_j$ that make up the measurement. The algorithm for simulating the quantum circuit may then be expressed in pseudocode as:

---

**Algorithm 1** Diagonal-Permutation-Hadamard Algorithm

---

1:  **function** DPH(*x*) $\triangleright$ *x* is a complex vector of length $N = 2^n$ with norm 1
2:  **for i** = 0 to u **do**
3:  **if** $\exists a \in \mathbb{C}^N \,|\, U_i = diag(a)$ **then**
4:  $x \leftarrow x \circ a$
5:  **else if** $\exists \sigma \in S_N \,|\, U_i \phi = \phi[\sigma] \,\forall \phi \in \mathbb{C}^N$ **then**
6:  $x \leftarrow x[\sigma]$
7:  **else**
8:  $x \leftarrow FWHT(x)$
9:  **end if**

---

(continued)

**Algorithm 1** Diagonal-Permutation-Hadamard Algorithm

| 10: | **end for** |
|---|---|
| 11: | $y \leftarrow x$ |
| 12: | **for** j = 0 to h **do** |
| 13: | **if** $\exists a \in \mathbb{C}^N \mid H_j = diag(a)$ **then** |
| 14: | $y \leftarrow y \circ a$ |
| 15: | **else if** $\exists \sigma \in S_N \mid H_j \phi = \phi[\sigma] \, \forall \phi \in \mathbb{C}^N$ **then** |
| 16: | $y \leftarrow y[\sigma]$ |
| 17: | **else** |
| 18: | $y \leftarrow FWHT(y)$ |
| 19: | **end if** |
| 20: | **end for** |
| 21: | **return** $x^\dagger y$ |
| 22: | **end function** |

Another key benefit of this algorithm can be the ease with which data can be batched. Specifically, the inherent operations can be easily parallelized. Coupled with the computation complexity advantage can make the "DPH" algorithm much faster than competing quantum frameworks for many common quantum circuit architectures.

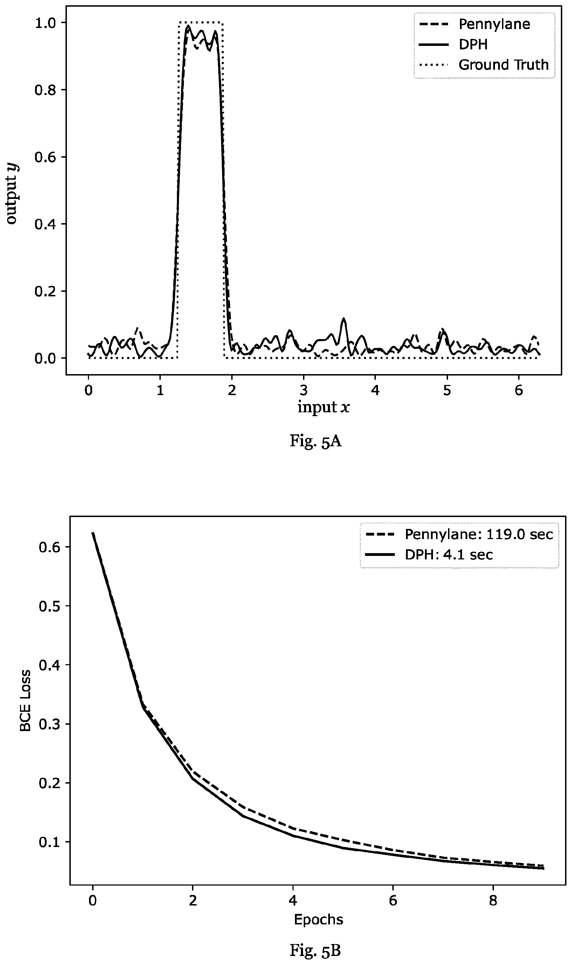

Fig. 5A, 5B illustrate results of using the above described algorithmic decomposition and quantum state evolution to perform quantum circuit simulations for a task of training a variational quantum circuit to learn a top-hat function via gradient optimization on a binary-cross entropy loss function using a Quantum Depth Infused (QDI) quantum circuit architecture, with a layer geometry shown in Fig. 4A. The results of the above described "DPH" algorithm written in Pytorch are compared to an execution with a state of the art "Pennylane "quantum simulation library wrapped in Pytorch. Both the Pennylane/Pytorch model and the DPH model written in Pytorch used 3 qubits, with the single data-feature was reuploaded with RZ gates on every qubit using an exponential encoding strategy. To ensure proper data-reuploading, the encoding architecture was repeated 10 times with the above variational layer fence-posting the encoding layers.

Fig. 5A illustrates the top hat function to be learned as well as the prediction of the dataset (top-hat function) with 250 datapoints obtained with the two trained variational quantum circuits after 10 training epochs. Fig. 5B illustrates the evolution of the binary-cross entropy loss as a function of training epochs. The legend of Fig. 5B illustrates the time cost analysis of running the same quantum circuit with the above described DPH algorithm written in Pytorch, versus the Pennylane quantum simulation library wrapped in Pytorch.

The model trained using the DPH algorithm took 4.0 seconds to train and achieved a test loss of $5.7*10^{-2}$, while the model trained using the Pennylane function library took 99.2 seconds to train and achieved a test loss of $6.4*10^{-2}$.

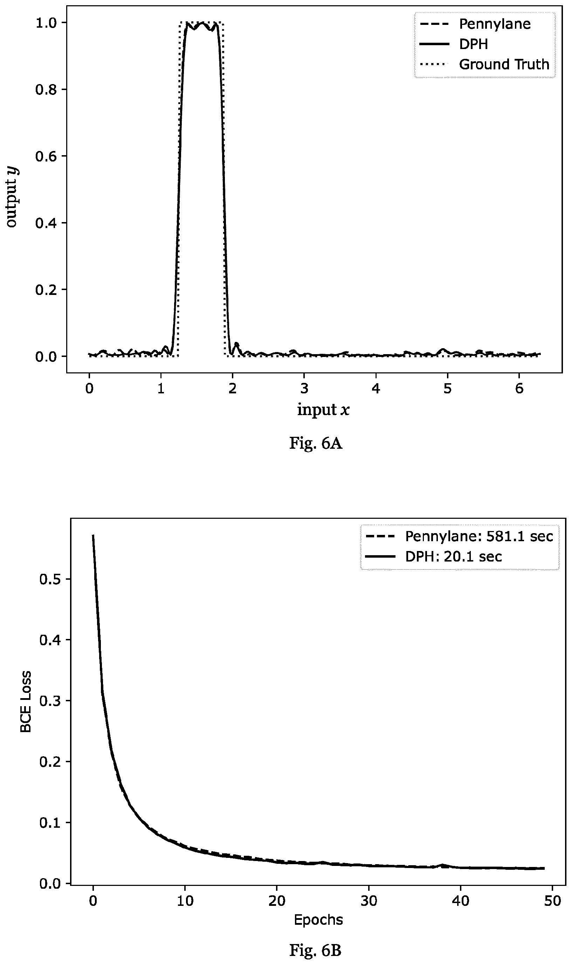

Figs. 6A and 6B show the same prediction and loss after 50 epochs of training. The model trained using the DPH algorithm took 20.1 seconds to train and achieved a test loss of $1.1*10^{-4}$, while the model trained using the Pennylane function library took 581.1 seconds to train and achieved a test loss of $1.6*10^{-4}$.

The results of this experiment show the DPH model achieving equal or better prediction results as Pennylane, while performing an order of magnitude faster, even for comparatively small quantum systems.

The skilled person will appreciate that the entire group of quantum $N$ x $N$ unitary matrices, known as $SU(N)$, can be made from the building-block gates CNOT (permutation), RZ(diagonal), and H(Hadamard). Thus, a layer-based decomposition into some order of diagonal, permutation, and Hadamard matrices is always possible for any quantum circuit. In some cases, a decomposition into these three base operations may be just as costly (or more) as applying a unitary/hermitian matrix directly. A benefit in computational speed may however arise for circuits with specific architectures, e.g. ones that use similar types of gates across many qubits at the same point. As mentioned previously, base operations generally refer to operations up of these gates that act on 1 to all qubits, even if the operation is trivial for a small (e.g. smaller than 50% or smaller than 20%) subset of the qubits (e.g. no change). These types of architectures are particularly common in the fields of quantum machine learning and quantum optimization where real world data are frequently embedded into quantum devices in the form of angles of rotation in rotation gates (RX, RY, RZ) which rotate a pure qubit with respect to the X, Y, or Z axis in the Bloch Sphere, a helpful geometrical representation of a qubit.

Although the invention was primarily illustrated on an example of a variational quantum circuit, the methods and system may equally be applied to other quantum circuits which lend themselves to decomposition into the base operations, e.g. based on a regularity/symmetry of the quantum operations. Since many quantum computation algorithms are expressed in terms of a basis of CNOT and single qubit rotation gates, such a decomposition may even be native to many architectures, e.g. mostly revolving around the decomposition of different rotation gates into Z-rotations and basis changes, e.g. through an application of Hadamard gates. With the decomposition into the base operations, the overall complexity of quantum state evolution may be reduced from O ($N^2$) to O ($N \log (N)$), enabling significant computation time benefits for state of the art quantum circuit simulation.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | system |
| 12 | client |
| 14 | plurality of quantum gates |
| 16 | detector |
| 18 | control system |
| 20 | layers of quantum gates |
| 22 | encoding layer |
| 24 | variational layer |
| 26 | sub-vectors |
| 27 | entangling gates |
| 28a-c | diagonal matrix operations |
| 30a, b | Hadamard matrix operation |

**Claims**

1. A computer-implemented method for simulation of a given quantum circuit, the method comprising:

separating the quantum circuit into layers of quantum gates (20-24) of a common gate class;
decomposing each of the layers of quantum gates (20-24) of the common gate class into a sequence of base operations (27, 28a-c, 30a,b), the base operations (27, 28a-c, 30a,b) being selected from

- a diagonal matrix operation (28a-c) based on unitary diagonal operations applied in parallel to qubits of the quantum circuit, wherein each of the unitary diagonal operations is expressible as a diagonal matrix, where all elements of the diagonal matrix not on the diagonal are equal to zero,
- a permutation matrix operation (27) expressible as a matrix with exactly one entry of 1 in every row and column, with the rest being zero, and
- a Hadamard matrix operation (30a, 30b) based on Hadamard gates applied in parallel to qubits of the quantum circuit that transforms a plurality of the qubits between two orthogonal bases;

evolving a quantum state vector according to the layers decomposed into the sequence of base operations (27, 28a-c, 30a,b), the quantum state vector encoding a quantum state of the qubits of the quantum circuit.

2. The method of claim 1, wherein the quantum state vector is representable by a vector of N=$2^n$ complex numbers.

3. The method of claim 1 or 2, wherein the method comprises extracting a diagonal matrix operation (28a-c) expressible as a parametrized rotation of each qubit by an associated angle.

4. The method of any one of the preceding claims, wherein the quantum circuit is a variational quantum circuit.

5. The method of any one of the preceding claims, wherein the quantum circuit comprises layers of quantum gates (20-24) applied in parallel to the qubits of the quantum circuit, wherein each of the layers of quantum gates (20-24) comprises the same quantum gate type applied to a subset or all of the qubits of the quantum circuit.

6. The method of any one of the preceding claims, wherein an evolution of the quantum state vector according to a Hadamard matrix operation (30a, 30b) is mathematically equivalent to a Hadamard transform of the quantum state vector of the qubits of the quantum circuit or a portion thereof, in particular based on the Fast-Hadamard-Walsh-Transform.

7. The method of any one of the preceding claims, wherein an evolution of the quantum state vector according to a permutation matrix operation (27) is mathematically equivalent to a permutation of memory access pointers pointing at values of the quantum state vector of the qubits of the quantum circuit.

8. The method of any one of the preceding claims, wherein an evolution of the quantum state vector according to a diagonal matrix operation (28a-c) is mathematically equivalent to an element-wise multiplication of the quantum state vector and the eigenvalues of the diagonal matrix operation (28a-c).

9. The method of claim 8, wherein the method further comprises determining the eigenvalues for non-parameter based diagonal matrix operations (28a-c) and storing the eigenvalues in a memory accessible by a processing system implementing the method.

10. The method of claim 8 or 9, wherein the method further comprises determining the eigenvalues for parameter based Z-rotation type operations of the qubits as the diagonal matrix operation (28a-c) based on or mathematically equivalent to evaluating the expression $\exp(iK\theta)$, wherein i is the imaginary unit, $\theta$ is a vector of rotation angles for the respective qubits of the quantum circuit according to the diagonal matrix operation (28a-c), and K is an assignment matrix with n columns and N rows for the number of qubits and computational basis states, respectively, wherein the assignment matrix K is a matrix of 1s and -1s.

11. The method of claim 10, wherein the assignment matrix K is obtainable based on the elementwise operation $K = -2J + 1$, wherein J is a binary assignment matrix, wherein each row of the binary assignment matrix corresponds to one of the computational basis states and columns indicate the qubits of the quantum circuit, wherein a one in the binary assignment matrix indicates an excited state of the respective qubit in the respective computational basis state, and a zero in the binary assignment matrix indicates a ground state of the respective qubit in the respective computational basis state.

12. A system for simulation of a given quantum circuit, wherein system is configured to:

   identify layers of quantum gates (20-24) of a common gate class in the quantum circuit;
   decompose each of the layers of quantum gates (20-24) into a sequence of base operations (27, 28a-c, 30a,b), the base operations (27, 28a-c, 30a,b) being selected from

   - a diagonal matrix operation (28a-c) based on diagonal operations applied in parallel to qubits of the quantum circuit, wherein each of the diagonal operations is expressible as a diagonal matrix, where all elements of the diagonal matrix not on the diagonal are equal to zero,
   - a permutation matrix operation (27) expressible as a matrix with exactly one entry of 1 in every row and column, with the rest being zero, and
   - a Hadamard matrix operation (30a, 30b), based on Hadamard gates applied in parallel to qubits of the quantum circuit that transforms a plurality of the qubits between two orthogonal bases;

   provide the quantum circuit expressed in terms of the base operations (27, 28a-c, 30a,b) for evolving a quantum state vector according to the layers decomposed into the sequence of base operations (27, 28a-c, 30a,b), the quantum state vector encoding a quantum state of the qubits of the quantum circuit.

13. The system of claim 12, wherein the system is further configured to evolve the quantum state vector according to the layers of quantum gates (20-24) decomposed into the sequence of base operations (27, 28a-c, 30a,b), the quantum state vector encoding a quantum state of the qubits of the quantum circuit.

14. The system of claim 12 or 13, wherein the quantum circuit is a variational quantum circuit, and the system is configured to update variational parameters of the quantum circuit encoding variable actions on the qubits of the quantum circuit and to determine an updated sequence of base operations (27, 28a-c, 30a,b) based on the variational parameters, in particular to determine updated diagonal matrix operations (28a-c) corresponding to the variational parameters.

15. A computer program comprising machine readable instructions, which when the computer program is executed by a processing unit cause the processing unit to implement a method according to any one of claims 1-11 and/or to implement and/or to control a system according to any one of claims 12-14.

Fig. 1

Fig. 2

| Separating the quantum circuit into layers of quantum gates of a common gate class | ⟋S10 |

| Decomposing each of the layers of quantum gates into a sequence of base operations, the base operations being selected from: diagonal matrix operation, permutation matrix operation, Hadamard matrix operation | ⟋S12 |

| evolving a quantum state vector according to the layers decomposed into the sequence of base operations, the quantum state vector encoding a quantum state of the qubits of the quantum circuit | ⟋S14 |

Fig. 3

Fig. 4A

Fig. 4B

Fig. 4C

Fig. 5A

Fig. 5B

Fig. 6A

Fig. 6B

Europäisches
Patentamt

European
Patent Office

Office européen
des brevets

## EUROPEAN SEARCH REPORT

**Application Number**

EP 24 17 5322

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/103692 A1 (ALLOUCHE CYRIL [FR] ET AL) 8 April 2021 (2021-04-08) * abstract; claim 1; figures 1-4 * * paragraph [0002] - paragraph [0169] * ----- | 1-15 | INV. G06N10/20 |
| A | Lykov Danylo ET AL: "Fast Simulation of High-Depth QAOA Circuits", , 12 September 2023 (2023-09-12), XP093216632, DOI: https://doi.org/10.48550/arXiv.2309.04841 Retrieved from the Internet: URL:https://doi.org/10.48550/arXiv.2309.04 841 [retrieved on 2024-10-21] * page 1 - page 8, right-hand column, paragraph 2 * ----- | 1-15 | |
| A | LAURA CLINTON ET AL: "Towards near-term quantum simulation of materials", ARXIV.ORG, CORNELL UNIVERSITY LIBRARY, 201 OLIN LIBRARY CORNELL UNIVERSITY ITHACA, NY 14853, 10 November 2022 (2022-11-10), XP091365063, * page 1 - page 88 * ----- | 1-15 | **TECHNICAL FIELDS SEARCHED (IPC)** G06N |

The present search report has been drawn up for all claims

| Place of search | Date of completion of the search | Examiner |
|---|---|---|
| The Hague | 22 October 2024 | Volkmer, Markus |

EPO FORM 1503 03.82 (P04C01)

**EP 4 651 037 A1**

## ANNEX TO THE EUROPEAN SEARCH REPORT
## ON EUROPEAN PATENT APPLICATION NO.

EP 24 17 5322

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | | Publication date |
|---|---|---|---|---|
| US 2021103692 A1 | 08-04-2021 | CA | 3057734 A1 | 27-09-2018 |
| | | CN | 110709851 A | 17-01-2020 |
| | | EP | 3602354 A1 | 05-02-2020 |
| | | FR | 3064380 A1 | 28-09-2018 |
| | | JP | 2020515999 A | 28-05-2020 |
| | | US | 2021103692 A1 | 08-04-2021 |
| | | WO | 2018172629 A1 | 27-09-2018 |

EPO FORM P0459

For more details about this annex : see Official Journal of the European Patent Office, No. 12/82